(19) **Europäisches Patentamt**
**European Patent Office**
**Office européen des brevets**

(11) **EP 4 068 556 A1**

(12) **EUROPEAN PATENT APPLICATION**
published in accordance with Art. 153(4) EPC

(43) Date of publication:
**05.10.2022 Bulletin 2022/40**

(21) Application number: **20893244.2**

(22) Date of filing: **23.11.2020**

(51) International Patent Classification (IPC):
**H02J 7/00** (2006.01)    **B60L 58/18** (2019.01)
**B60L 53/00** (2019.01)    **B62M 6/90** (2010.01)

(52) Cooperative Patent Classification (CPC):
Y02T 10/70; Y02T 10/7072; Y02T 90/14

(86) International application number:
**PCT/CN2020/130771**

(87) International publication number:
**WO 2021/104190 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.11.2019 CN 201911162593**

(71) Applicant: **Guangdong Greenway Technology Co., Ltd**
**Dongguan, Guangdong 523000 (CN)**

(72) Inventors:
• **WU, Wei**
**Dongguan, Guangdong 523000 (CN)**

• **JIN, Mingzhu**
**Dongguan, Guangdong 523000 (CN)**
• **ZHENG, Junbin**
**Dongguan, Guangdong 523000 (CN)**
• **ZHANG, Zhiping**
**Dongguan, Guangdong 523000 (CN)**
• **LIU, Cong**
**Dongguan, Guangdong 523000 (CN)**

(74) Representative: **Zaboliene, Reda**
**Metida**
**Business center Vertas**
**Gyneju str. 16**
**01109 Vilnius (LT)**

(54) **PARALLEL CHARGING AND DISCHARGING MANAGEMENT SYSTEM FOR MULTIPLE BATTERIES**

(57)    A parallel charging-discharging management system of multiple batteries comprises a main control module, a charging dual-MOS control module, a discharging dual-MOS control module, a communication module, a voltage sampling module, a current sampling module, a temperature sampling module, an electric quantity display module and batteries; the main control module is connected with a charging dual-MOS control module, a discharging dual-MOS control module, a communication module, a voltage sampling module, a current sampling module, a temperature sampling module and an electric quantity display module; the charging dual-MOS control module is connected with a power supply, batteries and a main control module, the discharging dual-MOS control module is connected with the batteries; the main control module and the load, the current sampling module is connected with the batteries and the main control module; the temperature sampling module is connected with the main control module; it prevents battery discharging and isolates parallel batteries.

**(Cont. next page)**

Fig. 1

**Description**

REFERENCE TO PRIOR APPLICATION

This application claims priority to Chinese Patent Application 201911162593.0, filed on November 25, 2019.

Field of the Invention

The present invention relates to the technical field of multiple batteries charging and discharging management, and in particular to a parallel charging and discharging management system of multiple batteries.

Background

With the increasingly prominent problems of environmental pollution and energy shortage, electric two-wheeled vehicles have developed rapidly in recent years thanks to their outstanding advantages of energy saving, low noise and zero emission. The real difference between electric two-wheeled vehicle and traditional fuel-powered two-wheeled vehicle lies in the power system: electric two-wheeled vehicle is powered by electric power, which is powered by batteries, and electric energy is converted into mechanical energy by motor and controller to drive the whole vehicle; people have higher and higher requirements for standby time and full-load working time besides their requirements for functions and performance; the increasing functions and performances bring a greater demand for energy, which will be inevitably contradictory with standby time and full-load working time. In order to solve this contradiction, people design low power consumption; sometimes two or more batteries are needed to power the equipment when the "portability" is not affected.

In the multiple batteries power supply system, the differences in capacity, internal resistance, self-discharging and charge acceptance of every single battery will lead to inconsistency among single batteries. A large number of experiments have proved that when the capacities of some single batteries in multiple-battery pack are greatly different, the whole multiple-battery pack will deteriorate to a great extent, and the group performance will be seriously reduced or even scrapped. At present, the battery charging and discharging modes of the most common multiple batteries devices are mainly charging and discharging in series or parallel. In particular, for charging and discharging in parallel, the inconsistency of battery characteristics will lead to mutual charging and discharging among the batteries, which will make their internal resistance increase and capacity decrease continuously, and battery performance greatly decreases; for charging and discharging in series, as the self-discharging rates of the batteries connected in series are different, we cannot make full use of the battery capacity, and the whole battery pack cannot be used as long as a battery in the battery pack is damaged during connection in series.

Therefore, the prior art needs to be improved.

Brief Summary of the Invention

The technical problem to be solved by the embodiments of the present invention is to provide a parallel charging and discharging management system of multiple batteries so as to solve the problems in the prior art.

According to one aspect of the embodiments of the present invention, a parallel charging and discharging management system of multiple batteries is disclosed, which comprises:
a main control module, a charging dual-MOS control module, a discharging dual-MOS control module, a communication module, a voltage measuring module, a current measuring module, a temperature measuring module, a battery level display module and batteries;

The main control module is connected with the charging dual-MOS control module, the discharging dual-MOS control module, the communication module, the voltage measuring module, the current measuring module, the temperature measuring module and the battery level display module, and the main control module is used for receiving the voltage, current, MOS tube and cell temperature parameters of the connected batteries collected by the voltage measuring module, the current measuring module and the temperature measuring module; according to the current single-battery voltage, current, MOS tube and cell temperature parameters, the allowable charging parameters of the charging dual-MOS control module for the currently connected batteries are set, and the allowable discharging parameters of the charging dual-MOS control module for the currently connected batteries are set; the main control module uploads the obtained battery parameter information to the external control unit through the communication module, and the main control module judges the SOC battery level of the current battery according to the obtained single-battery voltage information, and outputs corresponding instructions to control the display module and display the current battery level of the connected batteries;

The charging dual-MOS control module is connected with a power supply, batteries and a main control module, the main control module obtains the single-battery voltage, current, MOS tube and cell temperature parameters of the currently connected batteries respectively through the voltage measuring module, the current measuring module and the temperature measuring module, and then controls the charging dual-MOS control module to open or close a charging loop between the power supply and the connected batteries;

The discharging dual-MOS control module is connected with the batteries, the main control module and the load, and the main control module respectively obtains the single-battery voltage, current, MOS tube and cell temperature parameters of the currently connected batteries through the voltage measuring module, the current measuring module and the temperature measuring module, and then controls the discharging dual-MOS control module to open or close the discharging loop between the load and the connected batteries;

The communication module is connected with the main control module and used for the main control module to upload the current battery information to the external control unit and receive various external information instructions;

The voltage measuring module is connected with the batteries and the main control module, and the voltage measuring module is used for collecting the single-battery voltage parameters of the currently connected batteries in real time and sending them to the main control module;

The current measuring module is connected with the batteries and the main control module, and the current measuring module is used for collecting the current parameters flowing through the currently connected batteries in real time and sending them to the main control module;

The temperature measuring module is connected with the main control module, and the temperature measuring module is used for collecting the cell temperature of the currently connected batteries and the temperature parameters of the charging and discharging MOS tubes in real time, converting them into voltage information and transmitting them to the main control module;

The battery level display module is connected with the main control module, and it is used for receiving the control instructions output by the main control module and displaying the current battery level of the connected batteries;

The batteries comprise multiple batteries.

In a preferred embodiment of the parallel charging and discharging management system of multiple batteries based on the present invention, every battery connected in parallel has a group of independent charging dual-MOS control modules, and every group of charging dual-MOS control modules comprises a charging control MOS tube, a charging blocking MOS tube and corresponding MOS drive circuits;

The number of the battery charging control MOS tubes is consistent with that of the battery charging blocking MOS tubes, and it is the same as that of the batteries and is responsible for closing or turning off the charging loops of a group of batteries;

The battery charging control MOS tube and the battery charging blocking MOS tube are connected in series between the batteries and the power supply;

The battery charging control MOS tube is closed in a normal state, and controls the batteries to be charged within the threshold range of normal charging temperature, charging upper limit voltage and charging upper limit current; when the charging current is greater than the set threshold, the battery charging blocking MOS tube is closed to prevent other low-voltage batteries from being reversely charged when the current battery voltage is too high under the condition that the charging ports are connected in parallel.

In a preferred embodiment of the parallel charging and discharging management system of multiple batteries based on the present invention, every battery connected in parallel has a group of independent discharging dual-MOS control modules, and every group of discharging dual-MOS control modules comprises three discharging control MOS tubes, three discharging blocking MOS tubes and corresponding MOS drive circuits;

The numbers of the battery discharging control MOS tube groups and the battery discharging blocking MOS tube groups are the same as that of the batteries;

The number of MOS tubes of every battery discharging control MOS tube group is the same as that of every battery discharging blocking MOS tube group;

A group of battery discharging control MOS tubes and a group of battery discharging blocking MOS tubes are responsible for closing or turning off a battery discharging loop;

The battery discharging control MOS tube group is closed in normal state, and controls the batteries to be discharged the load within the threshold range of normal discharging temperature, discharging upper limit voltage and discharging upper limit current; when the discharging current of the batteries is greater than the set threshold, the battery discharging blocking MOS tube group is closed to prevent other high-voltage batteries from being reversely charged when the current battery voltage is too low under the condition that the discharging ports are connected in parallel.

In a preferred embodiment of the parallel charging and discharging management system of multiple batteries based on the present invention, the voltage measuring module comprises a BQ7693003DBT chip, and the voltage of a single battery that is currently connected is sampled through the BQ7693003DBT chip and the peripheral voltage acquisition circuit.

In a preferred embodiment of the parallel charging and discharging management system of multiple batteries based on the present invention, the temperature measuring module comprises an NTC thermistor, which converts the current charging and discharging MOS temperature and the cell temperature into corresponding voltage values, and then transmits them to the BQ769300DBT chip and the main control module for further judgment.

In a preferred embodiment of the parallel charging and discharging management system of multiple batteries based on the present invention, the main control module comprises an EFM32HG210F64G chip.

In a preferred embodiment of the parallel charging and discharging management system of multiple batteries based on the present invention, when the discharging ports are independent, every battery discharges independently according to the current load current, and when the discharging ports are in parallel, the discharging current distribution strategy is as follows:

It is assumed that the internal resistance of a battery A is Ra, the total voltage is Ua, the current flowing through battery A is Ia, the internal resistance of the other battery B is Rb, the total voltage is Ub, and the current flowing through battery B is Ib;

When battery A and battery B discharge in parallel, the two groups of batteries distribute the corresponding load current for discharging according to their remaining capacities due to the physical characteristics of the internal resistance of the batteries, and the distribution formula of their discharging current is as follows:

$$Ua-IaRa=Ub-IbRb \qquad\qquad (1).$$

In a preferred embodiment of the parallel charging and discharging management system of multiple batteries based on the present invention, the charging current distribution strategy is as follows:

When the charging ports are independent, every battery charges independently according to the current power supply current; when charging ports are in parallel, it is assumed that the internal resistance of a battery A is Ra, the total voltage is Ua, the current flowing through battery A is Ia, the internal resistance of the other battery B is Rb, the total voltage is Ub, and the current flowing through battery B is Ib;

When battery A and battery B are charged in parallel, the distribution formula of their charging current is as follows:

$$Ua+IaRa=Ub+IbRb \qquad\qquad (2).$$

Compared with the prior art, the present invention has the following advantages:

In the parallel charging and discharging management system of multiple batteries of the present invention, the parallel charging and discharging management system realizes the charging and discharging management of multiple batteries in parallel by matching the same charging and discharging dual-MOS control modules for the parallel batteries, and lower conduction voltage drop can be achieved by using the charging and discharging dual-MOS control modules, the power loss caused by traditional diode isolation is reduced, and the utilization rate of batteries is improved; the battery packs can be effectively isolated from each other by preventing them from charging each other; when the charging ports are independent, every battery is charged independently according to the current power supply current; when the charging ports are connected in parallel, every battery is charged in parallel according to its remaining capacity; when the discharging ports are independent, every battery discharges independently according to the current load current; when the discharging ports are connected in parallel, every battery distributes the corresponding load current for parallel discharging according to its remaining capacity; even when battery characteristics are inconsistent, the capacity of every battery can still be utilized fully and effectively, and the next charging is not required until all battery capacities are fully utilized, and all batteries in the battery pack can be fully charged after the next charging.

## Description of the Attached Drawings

In order to more clearly explain the embodiments of the present invention or the technical solutions in the prior art, the following will briefly introduce the drawings used in the embodiments or the prior art description; obviously, the attached drawings in the following description are some embodiments of the present invention, and for ordinary technicians in the field, other attached drawings can be obtained according to these drawings when no creative effort is made.

Fig. 1 is a system frame diagram of an embodiment of the parallel charging and discharging management system of multiple batteries of the present invention.

Fig. 2 is a parallel connection diagram of two battery discharging ports of another embodiment of the parallel charging and discharging management system of multiple batteries of the present invention.

In the figures: 1 main control module, 2 charging dual-MOS control module, 21 battery charging control MOS tube, 22 battery charging blocking MOS tube, 3 discharging dual-MOS control module, 31 battery discharging control MOS tube group, 32 battery discharging blocking MOS tube group, 4 communication module, 5 voltage measuring module, 6 current measuring module, 7 temperature measuring module, 8 battery level display module, 9 batteries.

**Specific Implementations**

In order to make the purpose, technical solutions and advantages of the embodiments of the present invention clearer, the technical solutions in the embodiments of the present invention will be clearly and completely described below with reference to the drawings in the embodiments of the present invention; obviously, the described embodiments are only some of the embodiments of the present invention but not all of them. Based on the embodiments of the present invention, all other embodiments obtained by ordinary technicians in the field are within the protection scope of the present invention when no creative effort is made.

A parallel charging and discharging management system of multiple batteries provided by the present invention will be described in detail with reference to the following drawings and embodiments.

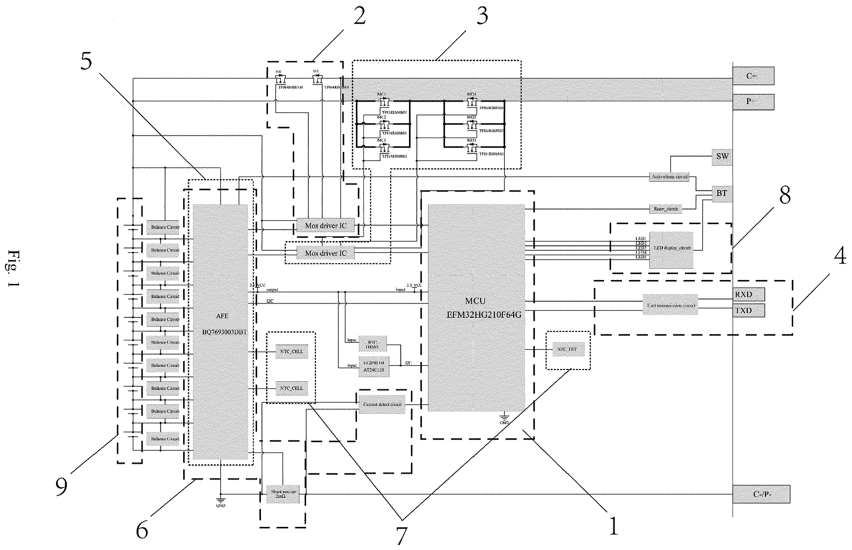

Fig. 1 is a system frame diagram of an embodiment of the parallel charging and discharging management system of multiple batteries of the present invention; as shown in Fig. 1, the parallel charging and discharging management system of multiple batteries of this embodiment comprises:

a main control module 1, a charging dual-MOS control module 2, a discharging dual-MOS control module 3, a communication module 4, a voltage measuring module 5, a current measuring module 6, a temperature measuring module 7, a battery level display module 8, batteries 9;

The main control module 1 is connected with the charging dual-MOS control module 2, the discharging dual-MOS control module 3, the communication module 4, the voltage measuring module 5, the current measuring module 6, the temperature measuring module 7 and the battery level display module 8, and the main control module 1 is used for receiving the voltage, current, MOS tube and cell temperature parameters of the connected batteries 7 collected by the voltage measuring module 5, the current measuring module 6 and the temperature measuring module 7; according to the current single-battery voltage, current, MOS tube and cell temperature parameters of the connected batteries 7, the allowable charging parameters of the charging dual-MOS control module 2 for the currently connected batteries 9, and the allowable discharging parameters of the discharging dual-MOS control module 3 for the currently connected batteries 9 are set; the main control module 1 uploads the obtained batteries 9 parameter information to the external control unit through the communication module 4, and the main control module 1 judges the SOC battery level of the current battery according to the obtained single-battery voltage information, and outputs corresponding instructions to control the display module 8 and display the current battery level of the connected batteries 9;

The charging dual-MOS control module 2 is connected with a power supply, batteries 9 and a main control module 1, the main control module 1 obtains the single-battery voltage, current, MOS tube and cell temperature parameters of the currently connected batteries 9 respectively through a voltage measuring module 5, a current measuring module 6 and a temperature measuring module 7, and then controls the charging dual-MOS control module 2 to open or close a charging loop between the power supply and the connected batteries 9;

The discharging dual-MOS control module 3 is connected with the batteries 9, the main control module 1 and the load, and the main control module 1 respectively obtains the single-battery voltage, current, MOS tube and cell temperature parameters of the currently connected batteries 9 through the overvoltage measuring module 5, the current measuring module 6 and the temperature measuring module 7, and then controls the discharging dual-MOS control module 3 to open or close the discharging loop between the load and the connected batteries 9;

The communication module 4 is connected with the main control module 1, and it is used for the main control module 1 to upload current battery information to the external control unit and receive various external information instructions;

The voltage measuring module 5 is connected with the batteries 9 and the main control module 1, and the voltage measuring module 5 is used for collecting the single-battery voltage parameters of the currently connected batteries 9 in real time and sending them to the main control module;

The current measuring module 6 is connected with the batteries 9 and the main control module 1, and the current measuring module 6 is used for collecting the current parameters flowing through the currently connected batteries 9 in real time and send them to the main control module 1;

The temperature measuring module 7 is connected with the main control module 1, and the temperature measuring module 7 is used for collecting the cell temperature of the currently connected batteries 9 and the temperature parameters of the charging and discharging MOS tubes in real time, converting them into voltage information and transmitting them to the main control module 1;

The battery level display module 8 is connected with the main control module 1, and it is used for receiving the control instructions output by the main control module 1 and displaying the current battery level of the connected batteries 9;

The batteries 9 comprises multiple batteries, which can discharge the load by connecting the discharging ports of multiple batteries in parallel or independently discharging the load by using the discharging ports of every battery; there are two ways to discharge the batteries 9: one is to discharge them in parallel through the parallel connection of discharging ports, while the other is to use the discharging ports of every battery separately to discharge the load independently; there are also two ways to charge them, one is to use a charger to charge the multiple batteries in parallel through the parallel connection of charging ports, while the other is to use the charging ports of every battery separately to charge every battery dependently through multiple chargers.

The voltage measuring module 5 comprises a BQ7693003DBT chip, and the voltage of a single battery that is currently connected is sampled through the BQ7693003DBT chip and the peripheral voltage acquisition circuit.

The temperature measuring module 7 comprises an NTC thermistor, which converts the current charging and discharging MOS temperature and cell temperature into corresponding voltage values, and then transmits them to the BQ769300DBT chip and the main control module for further judgment.

The main control module 1 comprises an EFM32HG210F64G chip.

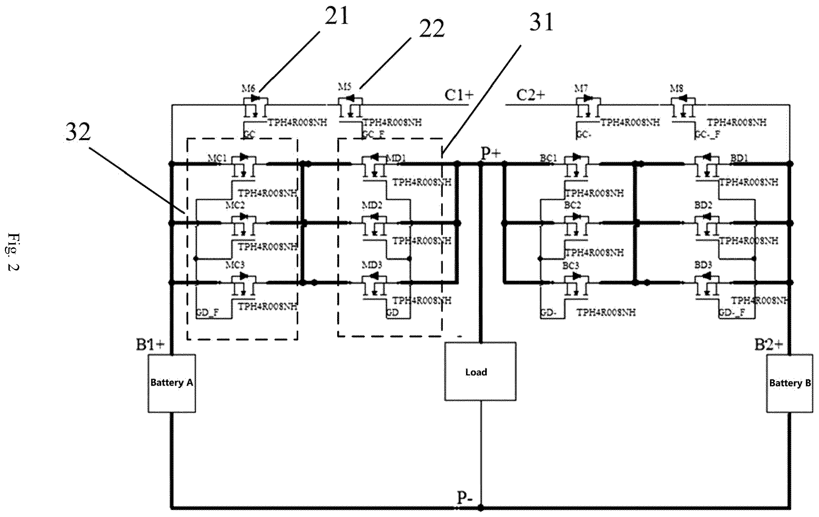

Fig. 2 is a parallel connection diagram of two battery discharging ports of another embodiment of the parallel charging and discharging management system of multiple batteries of the present invention; as shown in Fig. 2, as a typical embodiment, the number of batteries 9 in Fig. 2 is set as 2, namely battery A and battery B.

As shown in Fig. 2, in the embodiments of the present invention, the charging dual-MOS control module 2 is connected in series between the power supply anode and the battery anode, and the discharging dual-MOS control module 3 is connected in series between the load anode and the battery anode; the output current is sampled by a low-resistance power resistor, converted into a corresponding voltage value by a BQ769300DBT chip and then sent to the main control module 1 for processing, and the current MOS and battery cell temperature are sampled by an NTC thermistor and then sent to the BQ769300DBT chip and the main control module 1 for further judgment; the voltage of single battery is sampled by a BQ769300DBT chip and its peripheral circuits and then sent to the main control module 1 for processing; the main control module 1 makes a judgment according to the sampled current value, single battery voltage value, MOS and cell temperature value in order to output high and low levels to control the MOS drive IC in the charging and discharging dual-MOS control module 3 and complete the closing and turning of the MOS tube.

The charging dual-MOS control module 2 comprises multiple battery charging control MOS tubes 21 and multiple battery charging blocking MOS tubes 22;

The number of the battery charging control MOS tubes 21 is consistent with that of the battery charging blocking MOS tubes 22, it is the same as that of the batteries 9, and every battery charging control MOS tube 21 and a battery charging blocking MOS tube 22 is responsible for closing or turning off the charging loops of a group of batteries 9;
The battery charge control MOS tube 21 and the battery charge blocking MOS tube 22 are connected in series between the batteries 9 and the power supply;
The battery charging control MOS tube 21 is closed in a normal state, and controls the batteries to be charged within the threshold range of normal charging temperature, charging upper limit voltage and charging upper limit current; if it exceeds the threshold range of the charging upper limit current, the charging loop will be turned off; when the charging current is greater than the set threshold, the battery charging blocking MOS tube 22 is closed to prevent other low-voltage batteries from being reversely charged when the current battery voltage is too low under the condition that the charging ports are connected in parallel.
The discharging dual-MOS control module 3 comprises multiple batteries discharging control MOS tube groups 31 and multiple batteries discharging blocking MOS tube groups 32;
The numbers of the battery discharging control MOS tube groups 31 and the battery discharging blocking MOS tube groups 32 are the same as that of the batteries 9;
The number of MOS tubes of every battery discharging control MOS tube group 31 is the same as that of every battery discharging blocking MOS tube group 32;
A battery discharging control MOS tube group 31 and a battery discharging blocking MOS tube group 32 are responsible for the discharge management of one batteries 9;
The battery discharging control MOS tube group 31 is closed in normal state, and it is used to control the current batteries 9 to discharge to the load; when the discharging current of the batteries 9 is greater than the set threshold, the battery discharging blocking MOS tube group 32 is closed to prevent the current discharging batteries 9 from reversely charging other batteries 9.

In Fig. 2, the MOS tube groups MD1-MD3 are the battery discharging control MOS tube groups 31 of the battery A, and they are closed in a normal state and controls whether the battery A can discharge the load; the MOS tube groups MC1-MC3 are the battery discharging blocking MOS tube groups 32 of the battery A, and they are closed when the discharging current is greater than the set threshold and prevent the battery A from being reversely charged by the battery B when the battery A and the battery B discharge in parallel. Similarly, the MOS tube groups BC1-BC3 are discharging control MOS tube groups 31 of the battery B, and MOS tube groups BD1-BD3 are the battery discharging blocking MOS tube groups 32 of the battery B.

The MOS tube M6 is the battery charging control MOS tube 21 of the battery A, and it is closed in a normal state and controls whether the constant current source can charge the battery A; the MOS tube M5 is the battery charging blocking MOS tube 22 of the battery A, and it is closed when the charging current is greater than the set threshold and prevents the battery A from discharging and reversely charging the battery B when the user charges the two batteries at the charging ports in parallel. Similarly, the MOS tube M8 is the battery charging control MOS tube 21 of the battery B, and the MOS tube M7 is the battery charging blocking MOS tube 22 of the battery B.

With reference to Fig. 2, the discharging current distribution strategy when two battery discharging ports are connected in parallel and the charging current distribution strategy when charging ports are connected in parallel are explained:

When the discharging ports are independent, every battery discharges independently according to the current load current, and when the discharging ports are in parallel, the discharging current strategy when the discharging ports are connected in parallel is as follows:

It is assumed that the internal resistance of a battery A is Ra, the total voltage is Ua, the current flowing through battery A is Ia, the internal resistance of the other battery B is Rb, the total voltage is Ub, and the current flowing through battery B is Ib;

When the battery A and the battery B discharge in parallel, the two batteries 9 distribute the corresponding load current for discharging according to their remaining capacities, and the distribution formula of their discharging current is as follows:

$$Ua-IaRa=Ub-IbRb \tag{1}.$$

When that charging ports are connected in parallel, the charging current distribution strategy is as follows:
It is assumed that the internal resistance of a battery A is Ra, the total voltage is Ua, the current flowing through battery A is Ia, the internal resistance of the other battery B is Rb, the total voltage is Ub, and the current flowing through battery B is Ib;
When battery A and battery B are charged in parallel, the distribution formula of their charging current is as follows:

$$Ua+IaRa=Ub+IbRb \tag{2}.$$

The above parallel charging and discharging management system of multiple batteries provided by the present invention is introduced in detail; in this document, the principle and implementations of the present invention are explained by specific examples, and the explanations of the above embodiments are only used to help understand the methods and core ideas of the present invention. According to the idea of the present invention, there will be changes in the specific implementations and application scope for ordinary technicians in the field; to sum up, the contents of this specification should not be construed as a limitation for the present invention.

Finally, it should be noted that the above are only the preferred embodiments of the present invention, and they are not intended to limit the present invention; although the present invention has been described in detail with reference to the aforementioned embodiments, it is still possible for the technicians in the field to modify the technical solutions described in the aforementioned embodiments or equivalently replace some of the technical features; any modification, equivalent replacement, improvement, etc. made within the spirit and principle of the present invention shall be comprised in the protection scope of the present invention.

## Claims

1. A parallel charging and discharging management system of multiple batteries, wherein it comprises:

   a main control module, a charging dual-MOS control module, a discharging dual-MOS control module, a communication module, a voltage measuring module, a current measuring module, a temperature measuring module, a battery level display module and batteries;
   The main control module is connected with the charging dual-MOS control module, the discharging dual-MOS control module, the communication module, the voltage measuring module, the current measuring module, the temperature measuring module and the battery level display module, and the main control module is used for receiving the voltage, current, MOS tube and cell temperature parameters of the connected batteries collected by the voltage measuring module, the current measuring module and the temperature measuring module; according to the current single-battery voltage, current, MOS tube and cell temperature parameters, the allowable charging parameters of the charging dual-MOS control module for the currently connected batteries are set, and the allowable discharging parameters of the charging dual-MOS control module for the currently connected batteries are set; the main control module uploads the obtained battery parameter information to the external control unit through the communication module, and the main control module judges the SOC battery level of the current battery according to the obtained single-battery voltage information, and outputs corresponding instructions to control the display module and display the current battery level of the connected batteries;

The charging dual-MOS control module is connected with a power supply, batteries and the main control module, the main control module obtains the single-battery voltage, current, MOS tube and cell temperature parameters of the currently connected batteries respectively through the voltage measuring module, the current measuring module and the temperature measuring module, and then controls the charging dual-MOS control module to open or close a charging loop between the power supply and the connected batteries;

The discharging dual-MOS control module is connected with the batteries, the main control module and the load, and the main control module respectively obtains the single-battery voltage, current, MOS tube and cell temperature parameters of the currently connected batteries through the voltage measuring module, the current measuring module and the temperature measuring module, and then controls the discharging dual-MOS control module to open or close the discharging loop between the load and the connected batteries;

The communication module is connected with the main control module, and it is used for the main control module to upload the current battery information to the external control unit and receive various external information instructions;

The voltage measuring module is connected with the batteries and the main control module, and the voltage measuring module is used for collecting the single-battery voltage parameters of the currently connected batteries in real time and sending them to the main control module;

The current measuring module is connected with the batteries and the main control module, and the current measuring module is used for collecting the current parameters flowing through the currently connected batteries in real time and sending them to the main control module;

The temperature measuring module is connected with the main control module, and the temperature measuring module is used for collecting the cell temperature of the currently connected batteries and the temperature parameters of the charging and discharging MOS tubes in real time, converting them into voltage information and transmitting them to the main control module;

The battery level display module is connected with the main control module, and it is used for receiving the control instructions output by the main control module and displaying the current battery level of the connected batteries;

The batteries comprise multiple batteries.

2. The parallel charging and discharging management system of multiple batteries according to claim 1, wherein every battery connected in parallel has a group of independent charging dual-MOS control modules, and every group of charging dual-MOS control modules comprise a charging control MOS tube, a charging blocking MOS tube and corresponding MOS drive circuits;

The number of the battery charging control MOS tubes is consistent with that of the battery charging blocking MOS tubes, and it is the same as that of the batteries and is responsible for closing or turning off the charging loops of a group of batteries;

The battery charging control MOS tube and the battery charging blocking MOS tube are connected in series between the batteries and the power supply;

The battery charging control MOS tube is closed in a normal state, and controls the batteries to be charged within the threshold range of normal charging temperature, charging upper limit voltage and charging upper limit current; when the charging current is greater than the set threshold, the battery charging blocking MOS tube is closed to prevent other low-voltage batteries from being reversely charged when the current battery voltage is too high under the condition that the charging ports are connected in parallel.

3. The parallel charging and discharging management system of multiple batteries according to claim 1, wherein every battery connected in parallel has a group of independent discharging dual-MOS control modules, and every group of discharging dual-MOS control modules comprises three discharging control MOS tubes, three discharging blocking MOS tubes and corresponding MOS drive circuits;

The numbers of the battery discharging control MOS tube groups and the battery discharging blocking MOS tube groups are the same as that of the batteries;

The number of MOS tubes of every battery discharging control MOS tube group is the same as that of every battery discharging blocking MOS tube group;

A group of battery discharging control MOS tubes and a group of battery discharging blocking MOS tubes are responsible for closing or turning off a battery discharging loop;

The battery discharging control MOS tube group is closed in normal state, and controls the batteries to be discharged the load within the threshold range of normal discharging temperature, discharging upper limit voltage and discharging upper limit current; when the discharging current of the batteries is greater than the set threshold, the battery discharging blocking MOS tube group is closed to prevent other high-voltage batteries from being reversely charged when the current battery voltage is too low under the condition that the discharging ports are connected in parallel.

4. The parallel charging and discharging management system of multiple batteries according to claim 1, wherein the voltage measuring module comprises a BQ7693003DBT chip, and the voltage of a single battery that is currently connected is sampled through the BQ7693003DBT chip and the peripheral voltage acquisition circuit.

5. The parallel charging and discharging management system of multiple batteries according to claim 4, wherein the temperature measuring module comprises an NTC thermistor, which converts the current charging and discharging MOS temperature and the cell temperature into corresponding voltage values, and then transmits them to the BQ769300DBT chip and the main control module for further judgment.

6. The parallel charging and discharging management system of multiple batteries according to claim 1, wherein the main control module comprises an EFM32HG210F64G chip.

7. The parallel charging and discharging management system of multiple batteries according to claim 1, wherein when the discharging ports are independent, every battery discharges independently according to the current load current, and when the discharging ports are in parallel, the discharging current distribution strategy is as follows:

It is assumed that the internal resistance of a battery A is Ra, the total voltage is Ua, the current flowing through battery A is Ia, the internal resistance of the other battery B is Rb, the total voltage is Ub, and the current flowing through battery B is Ib;

When battery A and battery B discharge in parallel, the two groups of batteries distribute the corresponding load current for discharging according to their remaining capacities due to the physical characteristics of the internal resistance of the batteries, and the distribution formula of their discharging current is as follows:

$$Ua-IaRa=Ub-IbRb.$$

8. The parallel charging and discharging management system of multiple batteries according to claim 1, wherein the charging current distribution strategy is as follows:

When the charging ports are independent, every battery charges independently according to the current power supply current; when charging ports are in parallel, it is assumed that the internal resistance of a battery A is Ra, the total voltage is Ua, the current flowing through battery A is Ia, the internal resistance of the other battery B is Rb, the total voltage is Ub, and the current flowing through battery B is Ib;

When battery A and battery B are charged in parallel, the distribution formula of their charging current is as follows:

$$Ua+IaRa=Ub+IbRb.$$

Fig. 1

Fig. 2

EP 4 068 556 A1

12

## INTERNATIONAL SEARCH REPORT

| International application No. |
| --- |
| **PCT/CN2020/130771** |

**A. CLASSIFICATION OF SUBJECT MATTER**

H02J 7/00(2006.01)i; B60L 58/18(2019.01)i; B60L 53/00(2019.01)i; B62M 6/90(2010.01)i

According to International Patent Classification (IPC) or to both national classification and IPC

**B. FIELDS SEARCHED**

Minimum documentation searched (classification system followed by classification symbols)

H02J; B60L; B62M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 并联, 电压, 电流, 控制, 充电, 放电, cell, battery, voltage, current, control, charge, discharge, parallel

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110752645 A (GUANGDONG GREENWAY TECHNOLOGY CO., LTD.) 04 February 2020 (2020-02-04)<br>  claims 1-8 | 1-8 |
| Y | CN 107069886 A (GUANGZHOU JIYUE ELECTRONIC CO., LTD.) 18 August 2017 (2017-08-18)<br>  description, paragraphs 28-49, and figures 1-2 | 1-8 |
| Y | CN 107769281 A (CHENGDU KULUN TECHNOLOGY CO., LTD.) 06 March 2018 (2018-03-06)<br>  description, paragraphs 38-53, and figures 1-4 | 1-8 |
| A | CN 107742907 A (SUZHOU HUAZHIJIE TELECOM CO., LTD. et al.) 27 February 2018 (2018-02-27)<br>  entire document | 1-8 |
| A | CN 101394103 A (LENOVO PRIVATE LTD., SINGAPORE) 25 March 2009 (2009-03-25)<br>  entire document | 1-8 |
| A | CN 107204638 A (DELONG WEICHUANG TECHNOLOGY (SHENZHEN) CO., LTD.) 26 September 2017 (2017-09-26)<br>  entire document | 1-8 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 February 2021** | **23 February 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2020/130771**

**C.     DOCUMENTS CONSIDERED TO BE RELEVANT**

| Category* | Citation of document, with indication, where appropriate, of the relevant passages | Relevant to claim No. |
|---|---|---|
| A | US 2016241051 A1 (SAMSUNG SDI CO., LTD.) 18 August 2016 (2016-08-18) | 1-8 |

Form PCT/ISA/210 (second sheet) (January 2015)

INTERNATIONAL SEARCH REPORT
Information on patent family members

International application No.

**PCT/CN2020/130771**

| Patent document cited in search report | | | Publication date (day/month/year) | Patent family member(s) | | | Publication date (day/month/year) |
|---|---|---|---|---|---|---|---|
| CN | 110752645 | A | 04 February 2020 | None | | | |
| CN | 107069886 | A | 18 August 2017 | None | | | |
| CN | 107769281 | A | 06 March 2018 | None | | | |
| CN | 107742907 | A | 27 February 2018 | None | | | |
| CN | 101394103 | A | 25 March 2009 | US | 2009085527 | A1 | 02 April 2009 |
| | | | | JP | 4660523 | B2 | 30 March 2011 |
| | | | | TW | 200915699 | A | 01 April 2009 |
| | | | | TW | I475781 | B | 01 March 2015 |
| | | | | CN | 101394103 | B | 25 December 2013 |
| | | | | JP | 2009077466 | A | 09 April 2009 |
| | | | | US | 8203314 | B2 | 19 June 2012 |
| CN | 107204638 | A | 26 September 2017 | None | | | |
| US | 2016241051 | A1 | 18 August 2016 | US | 9876371 | B2 | 23 January 2018 |
| | | | | KR | 20160100675 | A | 24 August 2016 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911162593